(19)

Europäisches
Patentamt
European
Patent Office
Office européen
des brevets

(11) **EP 4 239 527 A1**

(12) **EUROPEAN PATENT APPLICATION**

(43) Date of publication:
**06.09.2023 Bulletin 2023/36**

(21) Application number: **22186912.6**

(22) Date of filing: **26.07.2022**

(51) International Patent Classification (IPC):
**G06N 3/04** *(2023.01)*    **G06N 3/08** *(2023.01)*

(52) Cooperative Patent Classification (CPC):
**G06N 3/088; G06N 3/045; G06N 3/047**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.03.2022 IN 202221011587**

(71) Applicant: **Tata Consultancy Services Limited
Maharashtra (IN)**

(72) Inventors:
• **SAKHINANA, Sagar Srinivas
411013 Pune, Maharashtra (IN)**

• **SARKAR, Rajat Kumar
560066 Bangalore, Karnataka (IN)**
• **RUNKANA, Venkataramana
411013 Pune, Maharashtra (IN)**

(74) Representative: **Goddar, Heinz J. et al
Boehmert & Boehmert
Anwaltspartnerschaft mbB
Pettenkoferstrasse 22
80336 München (DE)**

Remarks:
Amended claims in accordance with Rule 137(2)
EPC.

(54) **CONGENIALITY-PRESERVING GENERATIVE ADVERSARIAL NETWORKS FOR IMPUTING
LOW-DIMENSIONAL MULTIVARIATE TIME-SERIES DATA**

(57)    Recent advances and techniques in missing data imputation suffer from inherent limitations of preserving the relationship among the input feature attributes and the target variable and temporal relations between observations spanning across timeframes because of which it is also challenging to reconcile missing data for any downstream tasks. Present disclosure provides system and method that implement for congeniality-preserving Generative Adversarial Networks (cpGAN) for imputing low-dimensional incomplete multivariate industrial time-series data. The method minimizes the rubric based on the information theory for Machine Learning (ML) between the empirical probability distributions of the reconcile data and the non-linear original data to preserve the temporal dependencies and retain the input feature-attributes and target-variable relationship and probability distributions of the original data.

FIG. 3

**Description**

CROSS-REFERENCE TO RELATED APPLICATIONS AND PRIORITY

The present application claims priority to Indian application no. 202221011587, filed on March 3, 2022.

TECHNICAL FIELD

The disclosure herein generally relates to congeniality-preserving Generative Adversarial Networks (cpGAN), and, more particularly, to congeniality-preserving Generative Adversarial Networks (cpGAN) for imputing low-dimensional multivariate industrial time-series data.

BACKGROUND

Complex industrial units are big data digital behemoths, typically the sensors record in the scale of several Gigabytes of the plant operation data. These sensory observations are incomplete due to sensor failure including other various reasons and are of less utility. The quality of the data is of high priority for deploying data-driven artificial intelligence (AI) algorithms for process control, optimization, etc., as inaccurate decision-making impacts product quality, and plant/industrial units' safety. The imputation methods are in general classified as either discriminative or generative. Recent advances in missing data imputation through generative adversarial network (GAN) architectures suffer from inherent limitations of preserving the relationship among the input feature variables and the target variable and temporal relations between observations spanning across timeframes because of which it is also challenging to reconcile missing data for any downstream tasks.

SUMMARY

Embodiments of the present disclosure present technological improvements as solutions to one or more of the above-mentioned technical problems recognized by the inventors in conventional systems. For example, in one aspect, there is provided a processor implemented method for imputing low-dimensional incomplete multivariate industrial time-series data using a congeniality-preserving Generative Adversarial Networks (cpGAN). The method comprises obtaining, via one or more hardware processors, an input training dataset, a cluster independent random noise and one or more associated cluster labels corresponding to the input training dataset; transforming, via the one or more hardware processors, the cluster independent random noise by using the one or more associated cluster labels corresponding to the input training dataset to obtain a cluster dependent random noise; generating, via the one or more hardware processors, an imputed synthetic noise based on (i) a mask variable, (ii) one or more feature embeddings of the training dataset, (iii) a flipped mask variable, and (iv) the obtained cluster dependent random noise; generating, via the one or more hardware processors, one or more imputed high-dimensional feature embeddings using the generated imputed synthetic noise; predicting, via the one or more hardware processors, one or more imputed high-dimensional target feature embeddings of the training dataset using the one or more imputed high-dimensional feature embeddings; generating, via the one or more hardware processors, one or more single-step ahead imputed feature embeddings using the one or more imputed high-dimensional feature embeddings; and generating, via the one or more hardware processors, an imputed training data using the one or more single-step ahead imputed high-dimensional feature embeddings.
In an embodiment, the cluster dependent random noise is obtained from the cluster independent random noise that is sampled from a Gaussian distribution and the one or more associated cluster labels corresponding to the input training dataset.
In an embodiment, the flipped mask variable is obtained based on a difference between a pre-defined value and the mask variable.
In an embodiment, the method further comprises minimizing a difference between one or more target feature embeddings of the input training dataset and the one or more predicted imputed high-dimensional target feature embeddings.
In an embodiment, the method further comprises validating the imputed training data based on a comparison of the imputed training data and the input training dataset.
In an embodiment, the method further comprises classifying the one or more imputed high-dimensional feature embeddings into at least one class type.
In another aspect, there is provided a processor implemented system for imputing low-dimensional incomplete multivariate industrial time-series data using a congeniality-preserving Generative Adversarial Networks (cpGAN). The system comprises a memory storing instructions; one or more communication interfaces; and one or more hardware processors coupled to the memory via the one or more communication interfaces, wherein the one or more hardware processors are configured by the instructions to: obtain an input training dataset, a cluster independent random noise and one or more associated cluster labels corresponding to the input training dataset; transform the cluster independent random noise by using the one or more associated cluster labels corresponding to the input training dataset to obtain a cluster dependent random noise; generate an imputed synthetic noise based on (i) a mask variable, (ii) one or more feature embeddings of the training dataset, (iii) a flipped mask variable, and (iv) the obtained cluster dependent random noise; generate, by using a generator module comprised in the cpGAN, one or more imputed high-dimensional feature embeddings using the generated imputed synthetic noise; predict, by using a critic module comprised in the cpGAN, one or more imputed high-dimensional target feature embeddings of the training dataset using the one or more imputed high-dimensional feature embeddings; generate, by using a supervisor module comprised in the cpGAN, one or more single-step ahead imputed high-dimensional feature embeddings using the one or more imputed high-dimensional feature embeddings; and generate, by using a recovery module comprised in the cpGAN, an imputed training data using the one or more single-step ahead imputed high-dimensional feature embeddings.

In an embodiment, the cluster dependent random noise is obtained from the cluster independent random noise that is sampled from a Gaussian distribution and the one or more associated cluster labels corresponding to the input training dataset.

In an embodiment, the flipped mask variable is obtained based on a difference between a pre-defined value and the mask variable.

In an embodiment, the one or more hardware processors are further configured by the instructions to minimize a difference between one or more target feature embeddings of the input training dataset and the one or more predicted imputed high-dimensional target feature embeddings.

In an embodiment, the one or more hardware processors are further configured by the instructions to validate, by using a discriminator comprised in the cpGAN, the imputed training data based on a comparison of the imputed training data and the input training dataset.

In an embodiment, the one or more hardware processors are further configured by the instructions to classify, by using a discriminator comprised in the cpGAN, the one or more imputed high-dimensional feature embeddings into at least one class type.

In yet another aspect, there are provided one or more non-transitory machine-readable information storage mediums comprising one or more instructions which when executed by one or more hardware processors cause imputing low-dimensional incomplete multivariate industrial time-series data using a congeniality-preserving Generative Adversarial Networks (cpGAN) by: obtaining an input training dataset, a cluster independent random noise and one or more associated cluster labels corresponding to the input training dataset; transforming the cluster independent random noise by using the one or more associated cluster labels corresponding to the input training dataset to obtain a cluster dependent random noise; generating an imputed synthetic noise based on (i) a mask variable, (ii) one or more feature embeddings of the training dataset, (iii) a flipped mask variable, and (iv) the obtained cluster dependent random noise; generating one or more imputed high-dimensional feature embeddings using the generated imputed synthetic noise; predicting one or more imputed high-dimensional target feature embeddings of the training dataset using the one or more imputed high-dimensional feature embeddings; generating one or more single-step ahead imputed high-dimensional feature embeddings using the one or more imputed high-dimensional feature embeddings; and generating an imputed training data using the one or more single-step ahead imputed high-dimensional feature embeddings.

In an embodiment, the cluster dependent random noise is obtained from the cluster independent random noise that is sampled from a Gaussian distribution and the one or more associated cluster labels corresponding to the input training dataset.

In an embodiment, the flipped mask variable is obtained based on a difference between a pre-defined value and the mask variable.

In an embodiment, the one or more instructions which when executed by the one or more hardware processors further cause minimizing a difference between one or more target feature embeddings of the input training dataset and the one or more predicted imputed high-dimensional target feature embeddings.

In an embodiment, the one or more instructions which when executed by the one or more hardware processors further cause validating the imputed training data based on a comparison of the imputed training data and the input training dataset.

In an embodiment, the one or more instructions which when executed by the one or more hardware processors further cause classifying the one or more imputed high-dimensional feature embeddings into at least one class type.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for imputing low-dimensional incomplete multivariate industrial time-series data using a congeniality-preserving Generative Adversarial Networks (cpGAN), in accordance with an embodiment of the present disclosure.

FIG. 2 depicts an exemplary high level block diagram of the system 100 illustrating the congeniality-preserving Generative Adversarial Networks (cpGAN) for imputing low-dimensional incomplete multivariate industrial time-series data, in accordance with an embodiment of the present disclosure, in accordance with an embodiment of the present disclosure.

FIG. 3 depicts an exemplary flow chart illustrating a method for imputing low-dimensional incomplete multivariate industrial time-series data, using the systems of FIGS. 1 and 2, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned earlier, conventional imputation methods are in general classified as either discriminative or generative. Recent advances in missing data imputation through generative adversarial network (GAN) architectures suffer from inherent limitations of preserving the relationship among the input feature variables and the target variable and temporal relations between observations spanning across timeframes because of which it is also challenging to reconcile missing data for any downstream tasks. To overcome these drawbacks, embodiments of the present disclosure provide system and method that implement a Congeniality-Preserving Generative Adversarial Networks (cpGAN) that enables reconcile missing data by preserving the temporal dependencies, probability distributions of the original data and retain its utility for any downstream tasks.

More specifically, system and method of the present disclosure implement an implicit probabilistic model-based congeniality-preserving Generative Adversarial Networks (cpGAN) for imputing low-dimensional incomplete multivariate industrial time-series data with an adversarial trained generator neural network. The cpGAN architecture is presented as an alternative paradigm of research for numerical modeling of continuum mechanics and transport phenomena based on imputation techniques. The cpGAN architecture as implemented by the system and method of the present disclosure is established on two-player non-cooperative zero-sum adversarial game, based on game theory, and minimax optimization-approach. The system and method of the present disclosure also leverage artificial intelligence systems to demonstrate the random missing data imputation-utility efficacy tradeoff for downstream tasks on the open-source industrial benchmark datasets.

In other words, the congeniality-preserving Generative Adversarial Networks (cpGAN) is an architecture comprising of embedding, recovery, critic, supervisor, generator and discriminator and is implemented by the present application for imputing low-dimensional incomplete multivariate industrial time-series data. The method described herein minimizes the rubric based on the information theory for Machine Learning (ML) between the empirical probability distributions of the reconcile data and the non-linear original data to preserve the temporal dependencies and retain the input feature-attributes and target-variable relationship and probability distributions of the original data.

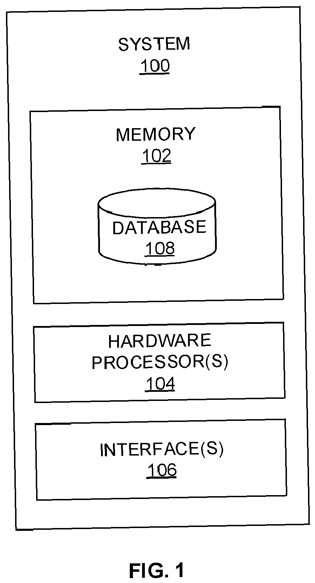

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 depicts an exemplary system for imputing low-dimensional incomplete multivariate industrial time-series data using a congeniality-preserving Generative Adversarial Networks (cpGAN), in accordance with an embodiment of the present disclosure. In an embodiment, the system 100 is also referred as "congeniality-preserving Generative Adversarial Networks (cpGAN) system", or cpGAN and may be interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information training dataset, associated cluster independent random noise and cluster labels, associated cluster dependent random noise, mask variable, associated flipped mask variable, imputed synthetic noise, one or more imputed high-dimensional feature embeddings, one or more imputed target feature embeddings, one or more single-step ahead imputed feature embeddings, imputed training data, Gaussian distribution of the cluster independent random noise corresponding to the input training dataset, validated imputed training data, and the like. The database 108 further comprises information related to error minimization between imputed training data and the input training data, class type associated with the one or more imputed high-dimensional feature embeddings, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

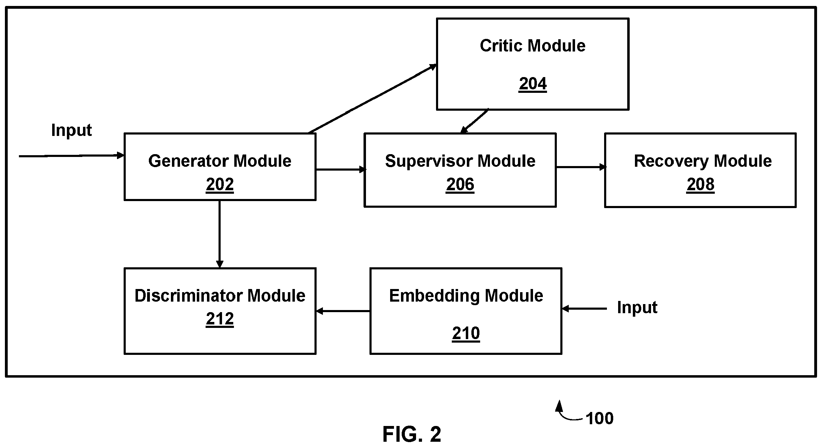

FIG. 2 depicts an exemplary high level block diagram of the system 100 illustrating the congeniality-preserving Generative Adversarial Networks (cpGAN) for imputing low-dimensional incomplete multivariate industrial time-series data, in accordance with an embodiment of the present disclosure. The congeniality-preserving Generative Adversarial Networks (cpGAN) system 100 includes a generator module 202, a critic module 204, a supervisor module 206, a recovery module 208, an embedding module 210, and a discriminator module 212. It is to be understood by a person having ordinary skill in the art or person skilled in the art that the communication between various modules as depicted in FIG. 2 shall not be construed as limiting the scope of the present disclosure. In other words, at any given point of time, any module depicted in FIG. 2 can either directly or via another module may communicate with other modules to generate specific outputs as described herein. For instance, the generator module 202 may communicate with recovery module 208 and the embedding module 210 directly, in an embodiment of the present disclosure. It is to be further understood by a person having ordinary skill in the art or person skilled in the art the above modules (modules 202 till 212) as depicted in FIG. 2 are implemented as at least one of a logically self-contained part of a software program, a self-contained hardware component, and/or, a self-contained hardware component with a logically self-contained part of a software program embedded into each of the hardware component that when executed perform the method described herein.

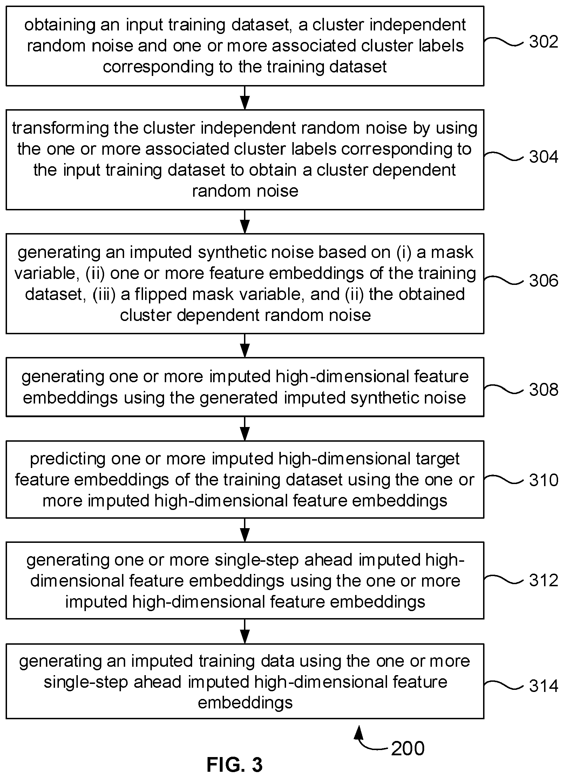

FIG. 3 depicts an exemplary flow chart illustrating a method for imputing low-dimensional incomplete multivariate industrial time-series data, using the systems of FIGS. 1 and 2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, and the flow diagram as depicted in FIG. 3.

The complex industrial units are big data digital behemoths. The sensory observations are incomplete due to sensor failure and thus are of less utility. The quality of the data is of high priority for deploying data-driven Artificial Intelligence (AI) algorithms for process control, optimization, etc. as inaccurate decision-making impacts product quality, and plant safety. The imputation methods are in general classified as either discriminative or generative. Recent advances in missing data imputation through GAN architectures have suffered from inherent limitations of preserving the relationship among the input feature variables and the target variable and temporal relations between observations spanning across timeframes. To overcome these drawbacks, embodiments of the present disclosure implement a congeniality-preserving Generative Adversarial Networks (cpGAN) framework to reconcile missing data by preserving the temporal dependencies, probability distributions of the original data and retaining its utility for downstream tasks. To put it briefly, congeniality-preserving Generative Adversarial Networks(cpGAN) is implemented for imputing low-dimensional incomplete multivariate industrial time-series data. The algorithmic approach minimizes the rubric based on the Information theory for Machine Learning between the empirical probability distributions of the reconciled data and the non-linear original data to preserve the temporal dependencies, retain the input feature variables and target-variable relationship, and probability distributions of the original data. The architecture as depicted in FIG. 2 is presented as an alternative paradigm of approach in comparison to the conventional first principles-based transport phenomena macroscopic mathematical modeling and numerical simulations for missing data imputation. In addition, the cpGAN generative imputation technique which fuses imperceptible noise, which is customized to the input process database can also be leveraged as a data anonymization technique, a privacy-preserving mechanism to prevent de-identification of the process-plants databases by the third-party adversary, and as defenses to adversarial attacks.

**Problem Formulation**

Consider representing a $f(\in N)$-dimensional euclidean real space (the totality of f-space) as $\mathbb{I} = \prod_{i=1}^{f} \mathbb{I}_i$ . $\mathbb{I} = \mathbb{I}_1 \times ... \times \mathbb{I}_f$ . Assume that $I$ is a continuous stochastic real-valued variable modeled by a finite-dimensional space, $\mathcal{J}$ . $D$ is termed as the realizations of $I$ and $D$ is referred to as the set of the f-tuples with the alphabet, $T_n \times 2N$ sampled from the domain, $\mathbb{I}^{(f)}$ . The euclidean probability distribution of $D$ is described by $\mathbb{P}(D)$. The dataset, $D \in \mathbb{I}^{(T_n \times 2N, f)}$ observed at timestamps, $t = \{1, 2, ..., (T_n \times 2N)\}$ is denoted as a sequence of $T_n \times 2N$ observations.

$$D = \{(D_1^{(t)}, ..., D_f^{(t)})\}, \ \forall t \in \{1, 2, ..., T_n \times 2N\} \tag{1}$$

$D^{(t)} \in I^{(f)}$ consists of f-continuous feature variables observations at $t$ - $th$ time point. $D^{(t)} = \{(D_1^{(t)}, ..., D_f^{(t)})\}$ represents the data vector. $D_j^{(t)}$ denotes the observed value of the $j$ - $th(\in f)$ feature variable at $t$ - $th$ time point. $M \in \mathbb{Z}^{(T_n \times 2N, f)}$ be a binary stochastic mask variable and it is described by,

$$M = \{(M_1^{(t)}, ..., M_f^{(t)})\}, \ \forall t \in \{1, 2, ..., T_n \times 2N\} \tag{2}$$

$M \in \{0,1\}^{(T_n \times 2N, f)}$, and it describes the missingness of the data. $M_j^{(t)}$ denotes the mask value (also referred as mask variable) for the $j$ - $th(\in f)$ feature variable at $t$ - $th$ time point. In the present disclosure, the system and method described herein address the missing data imputation for the multidimensional time series dataset under the setting if the missingness of the feature variables happens altogether at random. It is mathematically described by,

$$\mathbb{P}(M^{(t)}) \sim \mathbb{P}(M^{(t)}|D^{(t)}) \tag{3}$$

$D_j^{(t)}|M_j^{(t)} = 1$ describes observed values of $D_j$ for a $j$th-feature variable at $t$ - $th$ time point. $D_j^{(t)}$ is observed if $M_j^{(t)} = 1$ otherwise $D_j^{(t)}|M_j^{(t)} = 0$ is absent in the recorded data. The observed data of $D$ is described by,

$$D_{obs} = \{(D_1^{(t)} \odot M_1^{(t)}, ..., D_f^{(t)} \odot M_f^{(t)})\}, \ \forall t \in \{1, 2, ..., T_n \times 2N\} \tag{4}$$

The unobserved data of $D$ is described by,

$$D_{mis} = \{(D_1^{(t)} \odot (1 - M_1^{(t)}), \dots, D_f^{(t)} \odot (1 - M_f^{(t)}))\}, \; \forall t \in \{1, 2, \dots, T_n \times$$
$$2N\} \qquad (5)$$

The incomplete dataset, $D$ is rearranged as,

$$\widetilde{D}_{n,1:T_n} \in I^{T_n \times f}, \; \forall n \in \{1, 2, \dots, 2N\} \qquad (6)$$

$|2N|$ denotes the dataset cardinality. It is to be considered for $n = 1$, $\widetilde{D}_{1,1:T_1} \in \mathbb{I}^{T_1 \times f}$. $T_1$ denotes the finite length of the sequence, $n = 1$. $\widetilde{D}_{1,1:T_1}$ consists of observation values of $D_t$ at time points, $t \in \{1, 2, \dots, T_1\}$. In the same way for the sequence, $n = 2$, $\widetilde{D}_{2,1:T_2} \in \mathbb{I}^{T_2 \times f}$ is an array of arrays, which consists of observation values of $D_t$ at time points, $t \in \{(T_1 + 1), \dots, (T_1 + T_2)\}$. The finite-length, $T_n$ of $n$ - $th$ sequence is a hyper-parameter of the algorithm and is a constant for all the sequences, $\forall n \in \{1, \dots, 2N\}$. $\widetilde{D}_{n,1:T_n}$ be the observed multivariate time series of length, $T_n$ for a particular sequence, $n \in \{1, \dots, 2N\}$ corresponding to all the feature variables, $f$. $\widetilde{D}_{n,t}$ is the $n$ - $th$ sequence observation values of the feature variables, $f$ at the $t$ - $th$ time point. $\{(\widetilde{D}_{n,1:T_n})\}_{n=1}^{2N}$ is split into two disjoint finite sets with $N$ sequences.

$$\{\widetilde{D}_{train_{n,1:T_n}}\}_{n=1}^{N} \cap \{\widetilde{D}_{test_{n,1:T_n}}\}_{n=1}^{N} = \emptyset \qquad (7)$$

The missingness mask, M is also rearranged as,

$$M_{n,1:T_n} \in \mathbb{Z}^{T_n \times f}, \; \forall n \in \{1, 2, \dots, 2N\} \qquad (8)$$

$\{(M_{n,1:T_n})\}_{n=1}^{2N}$ is also split into two disjoint finite sets with $N$ sequences.

$$\{M_{train_{n,1:T_n}}\}_{n=1}^{N} \cap \{M_{test_{n,1:T_n}}\}_{n=1}^{N} = \emptyset \qquad (9)$$

The traditional Generative Adversarial Missing Data Imputation Networks consisted of generator and discriminator modules which are trained simultaneously in competing minimax game to generate imputed samples of having the same distribution as that of the fully observed data, $D$. Embodiments of the present disclosure implement a cpGAN algorithmic architecture to overcome the inherent limitations of the generative imputation networks to preserve the characteristics of a multidimensional fully observed time-series data such as joint distributions, temporal dynamics, the relationship between independent variables and the dependent target variable in the imputed data by operating on rearranged data, $\widetilde{D}_{n,1:T_n}$. The cpGAN architecture is trained to generate and impute the unobserved data of $\widetilde{D}_{train_{n,1:T_n}}$, $\forall n \in \{1, 2, \dots, N\}$ and the imputed data is denoted by, $\hat{D}_{n,1:T_n}$, $\forall n \in \{1, 2, \dots, N\}$. The cpGAN architecture performance is evaluated and reported on $\widetilde{D}_{test_{n,1:T_n}}$, $\forall n \in \{1, 2, \dots, N\}$. Given, $\widetilde{D}_{train_{n,1:T_n}}$ the imputation network of the cpGAN framework learns a density $\hat{P}(\hat{D}_{n,1:T_n})$ that best approximates the unknown probability density function, $P(\widetilde{D}_{train_{n,1:T_n}})$ such that it minimizes the weighted sum of the Kullback-Leibler($KL$) divergence and the Wasserstein distance($W$) of order-1 between the original, $\widetilde{D}_{train_{n,1:T_n}}$ and imputed data, $\hat{D}_{n,1:T_n}$ continuous probability distributions,

$$\min_{\hat{P}}[KL(P(\widetilde{D}_{train_{n,1:T_n}}) \| \hat{P}(\hat{D}_{n,1:T_n})) + \gamma W(P(\widetilde{D}_{train_{n,1:T_n}}), \hat{P}(\hat{D}_{n,1:T_n}))]$$

$$(10)$$

The imputed data, $\hat{D}_{n,1:T_n}$ should also preserve the temporal dynamics of the observed data, $\widetilde{D}_{train_{n,1:T_n}}$ for the imputed data to be of substantial utility in downstream forecasting tasks.

$$\min_{\hat{P}}[KL(P(\widetilde{D}_{train_{n,t}}|\widetilde{D}_{train_{n,1:t-1}}) \| \hat{P}(\hat{D}_{n,t}|\hat{D}_{n,1:t-1})) +$$

$$\gamma W(P(\widetilde{D}_{train_{n,t}}|\widetilde{D}_{train_{n,1:t-1}}), \hat{P}(\hat{D}_{n,t}|\hat{D}_{n,1:t-1}))], t \in 1:T_n \qquad (11)$$

The objective of missing data imputation generative neural network is also to preserve the relationship between the independent feature variables, $f_c \subset f$, and target variable, $f_T \in f$ of the observed data, $\widetilde{D}_{train_{n,1:T_n}}$. The unbiased imputed data, $\hat{D}_{n,1:T_n}$ is then beneficial for utilization in the downstream predictive analytics task. It is described by,

$$\min_{\hat{P}}KL[(P(\widetilde{D}_{train_{n,t}}^{f_T}|\widetilde{D}_{train_{n,t}}^{f_c}) \| \hat{P}(\hat{D}_{n,t}^{f_T}|\hat{D}_{n,t}^{f_c})) +$$

$$\gamma W(P(\widetilde{D}_{train_{n,t}}^{f_T}|\widetilde{D}_{train_{n,t}}^{f_c}), \hat{P}(\hat{D}_{n,t}^{f_T}|\hat{D}_{n,t}^{f_c}))], t \in 1:T_n \qquad (12)$$

Referring to steps of FIG. 3, in an embodiment, at step 202 of the present disclosure, the one or more hardware processors 104 obtain an input training dataset $(\widetilde{D}_{train_{n,1:T_n}})$, a cluster independent random noise $(Z_{n,1:T_n})$ and one or more associated cluster labels $(\tilde{C}_{train_{n,1:T_n}})$ corresponding to the input training dataset (e.g., low-dimensional multivariate time-series data as known in the art).

In an embodiment, at step 304 of the present disclosure, the one or more hardware processors 104 transform the cluster independent random noise $(Z_{n,1:T_n})$ using the one or more associated cluster labels $(\tilde{C}_{train_{n,1:T_n}})$ corre-sponding to the input training dataset $(\widetilde{D}_{train_{n,1:T_n}})$ to obtain a cluster dependent random noise $(Z_{n,1:T_n}^C)$ The cluster dependent random noise is obtained from a Gaussian distribution of the cluster independent random noise corresponding to the input training dataset, in an example embodiment of the present disclosure. The steps 302 and 304 are better understood by way of following illustrative description.

It is assumed by the present disclosure and its system and method that, $Z_{n,1:T_n} \in R_n^{T_n \times f}, \forall n \in \{1,2, \dots, N\}$ be an f-dimensional uniformly distributed random variable of length, $T_n$ for a sequence, n with values in the half-open interval [0,1) sampled from a uniform distribution, $Z$. The cluster independent random noise $(Z_{n,1:T_n})$ is transformed based on the cluster labels, $\tilde{C}_{train_{n,1:T_n}} \in R^{T_n}$, $\forall n \in \{1,2, \dots, N\}$. The cluster labels are determined by an iterative distance-based algorithm to partition the unlabeled dataset, $D_{train_{n,1:T_n}}$ into k-predetermined distinct non-overlapping, nonhomogeneous clusters. Label embedding vectors, $e^c \in R^{f'}, \forall c \in \{1, \dots, k\}$ are obtained from the learnable label em-bedding matrix, $W \in R^{k \times f'}$ based on the labels, $\tilde{C}_{train_{n,1:T_n}}$. $f'$ is the characteristic dimension (a hyperparameter) of the embedding matrix, $W$. The label embedding vectors, $e^c$ corresponding to the labels, $C_{train_{n,1:T_n}}$ are concatenated to obtain the label matrix, $L^c_{n,1:T_n}$. Matrix-matrix product of $Z_{n,1:T_n}$ and $L^c_{n,1:T_n}$ is performed to obtain the cluster dependent random noise (also referred as cluster membership aware noise and interchangeably used herein), $Z^C_{n,1:T_n}$, in an example embodiment of the present disclosure. The labels, $\tilde{C}_{train_{n,1:T_n}}$ corresponding to the fully observed dataset, $\widetilde{D}_{train_{n,1:T_n}}$ are obtained by performing vector quantization through the unsupervised learning technique. It is to be understood by a person having ordinary skill in the art that matrix-matrix product of $Z_{n,1:T_n}$ and $L^c_{n,1:T_n}$ operation shall not be construed as limiting the scope of the present disclosure. The following is determined by the *k*-means clustering algorithm:

1. Initialize cluster centroids randomly, $\mu_1, \mu_2, \dots, \mu_k \in I^{(f)}$.
2. Repeat until convergence to minimize the within-cluster sum of pairwise squared deviations:

$$\{$$

for every n, while $n \leq N, \forall n \in \{1, 2, \dots, N\},$

for each $n$, set

$$\tilde{C}_{train_{n,1:T_n}} := \arg\min_m \|\widetilde{D}_{train_{n,1:T_n}} - \mu_m\|^2$$

for each $m \in k$, set

$$\mu_m := \frac{\sum_{t=1}^{T_n} 1\{\tilde{C}_{train_{n,1:T_n}} = m\} \widetilde{D}_{train_{n,t}}}{\sum_{t=1}^{T_n} 1\{\tilde{C}_{train_{n,1:T_n}} = m\}}$$

$$\}$$

Referring to steps of FIG. 3, in an embodiment, at step 306 of the present disclosure, the one or more hardware processors 104 generate an imputed synthetic noise $(W_{\theta'}(\widetilde{D}_{train_{n,1:T_n}} \odot M_{n,1:T_n} + (1 - M_{n,1:T_n}) \odot Z^C_{n,1:T_n})$ based on (i) a mask variable ($M_{n,1:T_n}$), (ii) one or more feature embeddings of the training dataset $(\widetilde{D}_{train_{n,1:T_n}})$, (iii) a flipped mask variable (**1 - $M_{n,1:T_n}$**), and (iv) the obtained cluster dependent random noise $(Z^C_{n,1:T_n})$. The system 100 invokes the generator module 202 of the cpGAN for generating the imputed synthetic noise. In the present disclosure, the one or more hardware processors 104 via the generator module 202 (also referred as a generator and interchangeably used herein) perform a linear transformation on the summation of the product of the mask variable with the feature embeddings of the training dataset and the flipped mask variable with the cluster-dependent random noise to obtain the imputed synthetic noise. In an embodiment, the flipped mask variable is obtained based on a difference between a pre-defined value (e.g., in this case value of **'1') and the mask variable ($M_{n,1:T_n}$)**. It is to be understood by a person having ordinary skill in the art or person skilled in the art that the pre-defined value = 1 shall not be construed as limiting the scope of the present disclosure. In an embodiment, at step 308 of the present disclosure, the one or more hardware processors 104 generate one or more imputed high-dimensional feature embeddings ($\hat{H}_{n,1:T_n}$) using the generated imputed synthetic noise. The generator module 202 generates one or more imputed high-dimensional feature embeddings ($\hat{H}_{n,1:T_n}$) using the generated imputed synthetic noise, in an embodiment of the present disclosure. The one or more hardware processors 104 further classify the one or more imputed high-dimensional feature embeddings into at least one class type (e.g., real, or fake).

The above steps 306 and 308 that describe generation of the imputed synthetic noise $(W_{\theta'}(\widetilde{D}_{train_{n,1:T_n}} \odot M_{n,1:T_n} + (1 - M_{n,1:T_n}) \odot Z^C_{n,1:T_n})$ and the one or more imputed high-dimensional fea-

ture embeddings ($\hat{H}_{n,1:Tn}$) may be better understood by way of following illustrative description:

The generator module 202 comprised in the cpGAN takes as input the realizations of $\widetilde{D}_{train_{n,1:Tn}}$ , $M_{n,1:T_n}$, $Z^C_{n,1:Tn}$ $Z_{n,1:Tn}$ and outputs a high-dimensional latent variable, $\underline{H}_{n,1:T_n}$, and the same is expressed way of equation below:

$$G_{cpGAN}: \widetilde{D}_{train_{n,1:T_n}} \times M_{n,1:T_n} \times Z^C_{n,1:T_n} \rightarrow \underline{H}_{n,1:T_n} \tag{13}$$

The generative imputation neural network function can also be viewed as, $G_{cpGAN}: I^{(T_n,f)} \times \{0,1\}^{(T_n,f)} \times [0,1]^{(T_n,f)} \rightarrow H^{(T_n,f)}, \forall n \in \{1,2, \dots , N\}$. The temporal latent variables $\underline{H}_{n,1:T_n}$, $H_{n,1:T_n} \in H$ and are computed as,

$$\underline{H}_{n,1:T_n} = G_{cpGAN}(W_{\theta'}(\widetilde{D}_{train_{n,1:T_n}} \odot M_{n,1:T_n} + (1 - M_{n,1:T_n}) \odot Z^C_{n,1:T_n})) \tag{14}$$

$$\hat{H}_{n,1:T_n} = M_{n,1:T_n} \odot \widetilde{H}_{train_{n,1:T_n}} + (1 - M_{n,1:T_n}) \odot \underline{H}_{n,1:T_n} \tag{15}$$

$W_{\theta'}$ denotes the trainable parameter and it is shared across the sequences, $n$, $\forall n \in \{1,2, \dots , N\}$. $\odot$ denotes Hadamard product and $1 \in R^{T_n \times f}$. The generator (also referred as the generator module) is realized by leveraging a sequential operation on a 3-layer stack of neural-network architectures comprising of unidirectional LSTM and a feed-forward neural network layer, in an example embodiment of the present disclosure. The loss function for the incomplete observed data is described below,

$$\mathcal{L}_G(\widetilde{H}_{train_{n,1:T_n}}, \hat{H}_{n,1:T_n}) = \sum_{n=1}^N \left(1 - M_{n,1:T_n}\right)(\widetilde{H}_{train_{n,1:T_n}} - \hat{H}_{n,1:T_n})^2 \tag{16}$$

It is to be understood by a person having ordinary skill in the art or person skilled in the art that the generator architecture as described above shall not be construed as limiting the scope of the present disclosure.
In an embodiment, at step 310 of the present disclosure, the one or more hardware processors 104 predict one or more imputed high-dimensional target feature embeddings $\hat{H}^{(T)}_{n,1:T_n}$ also referred as $\widetilde{H}^{(T)}_{train_{n,1:T_n}}$ ) of the training dataset using the one or more imputed high-dimensional feature embeddings ($\hat{H}_{n,1:T_n}$). The system 100 of the present disclosure invokes a critic module 204 from the cpGAN 100 for prediction. More specifically, in the critic module (or also referred as a critic neural network or a critic and interchangeably used herein), there comprises a $F_{cpGAN}: H^*_{n,1:T_n} \rightarrow R$ , which is a mathematical function used for determining the target variable. Here, * refers to $\widetilde{H}^{(1:f-1)}_{train}$ or $\hat{H}^{(1:f-1)}$. The critic neural network function takes as input the realizations of $\widetilde{H}^{(1:f-1)}_{train_{n,1:T_n}}$ or $\hat{H}^{(1:f-1)}_{n,1:T_n}$ and outputs, $\widetilde{H}^{(T)}_{train_{n,1:T_n}}$ or $\hat{H}^{(T)}_{n,1:T_n}$ . The variable subset selection includes the features attributes from the set $\{1, \dots , f - 1\} \subset f$ in $H^{\{(1,\dots,f-1)\}^*}_{n,1:T_n}$ as input variables to the model. The last feature variable in $H^{\{(T)\}^*}_{n,1:T_n}$ denoted by the superscript, $T \in f$ denotes the target variable to predict. The loss function for the target variable prediction is described below:

$$\mathcal{L}_F(\widetilde{H}_{train_{n,1:T_n}}, \hat{H}_{n,1:T_n}) = \sum_{n=1}^N \left(F_{cpGAN}(\widetilde{H}^{(1:f-1)}_{train_{n,1:T_n}}) - F_{cpGAN}(\hat{H}^{(1:f-1)}_{n,1:T_n})\right)^2 \tag{17}$$

The critic module preserves the relationship between independent feature columns and the target variable in the real dataset during the adversarial training of $G_{cpGAN}$ to generate the relationship preserving synthetic data, $\hat{D}_{n,1:T_n}$ by minimizing the $\mathcal{L}_F$.

In an embodiment, at step 312 of the present disclosure, the one or more hardware processors 104 generate one or more single-step ahead imputed high-dimensional feature embeddings $(H^*_{n,1:t})$ using the one or more predicted imputed high-dimensional target feature embeddings. In an embodiment, at step 314 of the present disclosure, the one or more hardware processors 104 generate via a recovery module 208 an imputed training data $(D^*_{n,1:T_n})$ using the one or more single-step ahead imputed high-dimensional feature embeddings $(H^*_{n,1:T_n}/H'^*_{n,1:T_n})$. The steps 312 and 314 may be better understood by way of following illustrative description. The system 100 of the present disclosure invokes a supervisor module 206 from the cpGAN for generation of the one or more single-step ahead imputed high-dimensional feature embeddings $(H^*_{n,1:t})$. In an embodiment, the supervisor module from the cpGAN leverages a supervisor neural network function, $S_{cpGAN}$ to retain conditional temporal dynamics of the original data in the imputed temporal data, $\hat{D}_{n,1:T_n}$. The $G_{cpGAN}$ neural network of the cpGAN framework generates the synthetic latent variables, $\hat{H}_{n,1:T_n}$. The auto-regressive, $S_{cpGAN}: H^*_{n,1:t-1} \rightarrow H^*_{n,t}$, $\forall n \in \{1,2,\dots,N\}$, $t \in 1: T_n$ takes as input $H^*_{n,1:t-1}$ and predicts the one-step-ahead temporal latent variable, $H^*_{n,t}$ conditioned on the past latent sequences. It can also be expressed as, $S_{cpGAN}$: $H^*_{n,1:T_n} \in \prod_t \prod^f_{j=i} \mathbb{H}_j \rightarrow H'^*_{n,1:T_n} \in \prod_t \prod^f_{j=i} \mathbb{H}_j$. The cpGAN framework effectively captures the temporal dynamics of the true data by minimizing the supervised loss,

$$\mathcal{L}_S = \left[ \sum^N_{n=1} \sum_t \| H^*_{n,1:t} - S_{cpGAN}(H^*_{n,1:t-1}) \|_2 \right] \tag{18}$$

The $G_{cpGAN}$ by operating in the closed-loop receives the ground-truth, $\widetilde{H}_{train_{n,1:T_n}}$ from the embedding module comprising in the cpGAN. It minimizes $L_S$ by forcing the $\hat{H}_{n,1:T_n}$ appraised by the improper adversary $(D_{cpGAN})$ to capture the single-step transitions of the $\widetilde{H}_{train_{n,1:T_n}}$.

The embedding module 210 comprised in the cpGAN, takes as input the realizations of $\widetilde{D}_{train_{n,1:T_n}}$, and outputs feature embeddings, $\widetilde{H}_{train_{n,1:T_n}}$.

$$E_{cpGAN}: \widetilde{D}_{train_{n,1:T_n}} \in \prod_t \prod^f_{j-i} \mathbb{I}_j \rightarrow \widetilde{H}_{train_{n,1:T_n}} \in \prod_t \prod^f_{j=i} \mathbb{H}_j, \forall n \in \{1,2,\dots,N\} \tag{19}$$

$\mathbb{H}$ denotes the latent embedding space, $\prod^f_{j=i} \mathbb{H}_j$. The supervisor module 206 takes as input the temporal latent feature embeddings, $H^*_{n,1:T_n}$ and predicts one-step ahead temporal embeddings, $H'^*_{n,1:T_n}$.

$$S_{cpGAN}: H^*_{n,1:T_n} \in \prod_t \prod^f_{j-i} \mathbb{H}_j \rightarrow H'^*_{n,1:T_n} \in \prod_t \prod^f_{j=i} \mathbb{H}_j, \forall n \in \{1,2,\dots,N\} \tag{20}$$

The recovery module 208 (also referred as recovery function and interchangeably used herein) takes as input the high-dimensional latent embeddings, $H^*_{n,1:T_n}$ in the supervised setting or $H'^*_{n,1:T_n}$ in the unsupervised setting and transforms to their corresponding low-dimensional representations, $D^*_{n,1:T_n}$. The superscript, * denotes for real variables, $\widetilde{H}_{train_{n,1:T_n}}$, $\widetilde{H}'_{train_{n,1:T_n}}$, $\widetilde{D}_{train_{n,1:T_n}}$ or for synthetic imputed variables, $\hat{H}_{n,1:T_n}$, $\hat{H}'_{n,1:T_n}$ and $\hat{D}_{n,1:T_n}$ respectively.

$$R_{cpGAN}: H^*_{n,1:T_n} \, or \, H'^*_{n,1:T_n} \in \in \prod_t \prod_{j-i}^f \mathbb{H}_j \to D^*_{n,1:T_n} \in \prod_t \prod_{j=i}^f \mathbb{I}_j, \forall n \in \{1,2,\dots,N\}$$

$$(21)$$

The learnable parameters of the embedding and recovery modules are transformed by the joint training of the modules in the supervised-learning approach of reconstructing the input fully observed temporal data, $\widetilde{D}_{train_{n,1:T_n}}$ through by minimizing a supervised loss as described below,

$$\mathcal{L}_R = \sum_{n=1}^N \| \widetilde{D}_{train_{n,1:T_n}} - \hat{D}_{train_{n,1:T_n}} \|_2 \qquad (22)$$

In joint training of the generator module 202, the supervisor module 206 and the recovery module 208 in unsupervised learning approach, the first moment, $|\underline{D}1 - \underline{D}_2|$ and second-order moment, $|\sqrt{\hat{\sigma}_1^2} - \sqrt{\hat{\sigma}_2^2}|$ differences, defined between the original data, $\widetilde{D}_{train_{n,1:T_n}}$ and the imputed data, $\hat{D}_{n,1:T_n}$ are minimized respectively. In other words, a difference between one or more target feature embeddings of the input training dataset and the one or more predicted imputed high-dimensional target feature embeddings is minimized using the critic module 204.

The sample means for fully-observed data, $\widetilde{D}_{train_{n,1:T_n}}$ and imputed data, $\hat{D}_{n,1:T_n}$ is computed by,

$$\underline{D}_1 = \frac{1}{N}\sum_{j=1}^f \sum_{n=1}^N \widetilde{D}^{(j)}_{train_{n,1:T_n}} \in I^{(f)}$$ and $\underline{D}_2 = \frac{1}{N}\sum_{j=1}^f \sum_{n=1}^N \hat{D}^{(j)}_{n,1:T_n} \in I^{(f)}$. The sample variances, $\hat{\sigma}_1^2$, $\hat{\sigma}_2^2 \in I^{(f)}$ are evaluated by,

$$\hat{\sigma}_1^2 = \frac{1}{N}\sum_{j=1}^f \sum_{n=1}^N (\widetilde{D}^{(j)}_{train_{n,1:T_n}} - \underline{D}_1^{(j)})^2 \text{ and } \hat{\sigma}_2^2 = \frac{1}{N}\sum_{j=1}^f \sum_{n=1}^N (\hat{D}^{(j)}_{n,1:T_n} - \underline{D}_2^{(j)})^2.$$

$$\mathcal{L}_{US} = |\underline{D}_1 - \underline{D}_2| + |\sqrt{\hat{\sigma}_1^2} - \sqrt{\hat{\sigma}_2^2}| \qquad (23)$$

The goal of the generator module 202, the supervisor module 206, and recovery module 208 is to minimize the first and the second-order moment's differences between the fully-observed input data, $\widetilde{D}_{train_{n,1:T_n}}$, and the imputed temporal data, $\hat{D}_{n,1:T_n}$ obtained from its corresponding high-dimensional latent representations, $\hat{H}'_{n,1:T_n}$ in the unsupervised learning approach. By minimizing, $\mathcal{L}_{US}$, $\hat{P}(\hat{D}_{n,1:Tn})$ learns the underlying probability distributions of the input temporal data, $P(\widetilde{D}_{train_{n,1:Tn}})$. Each of the embedding and recovery modules is realized by leveraging a sequential operation on a 3-layer stack of neural-network architectures comprising of uni-directional Long-Short-Term-Memory (LSTM) and a feed-forward neural network layer.

The one or more hardware processors 104 further validate the imputed training data based on a comparison of the imputed training data and the input training dataset. The validation is described above as performed by the recovery module 208. The validation outcome which is referred as a validation dataset is utilized for the hyper-parameter tuning of the cpGAN/system 100.

The one or more hardware processors 104 further classify the one or more imputed high-dimensional feature embeddings into at least one class type. In the present disclosure, the system and method invoke a discriminator (also referred as a discriminator module 212 or a discriminator network and interchangeably used herein) comprised in the cpGAN for performing the classification. The above step of classification may be better understood by way of following description. The objective of the discriminator network, $D_{cpGAN}$ in cpGAN architecture is to distinguish the observed and imputed values in $\hat{H}_{n,1:T_n}$. The discriminator neural network 212 performs classification of the one or more imputed high-dimensional feature embeddings into at least one class type, and is described by way of expression below,

$$D_{cpGAN}: \hat{H}_{n,1:T_n} \times \tilde{H}_{train_{n,1:T_n}} \times H_{n,1:T_n} \rightarrow \hat{M}_{n,1:T_n}, p^*_{n,1:T_n,m}, p^*_{n,1:T_n}, P(H^*_{n,1:T_n}) \qquad (24)$$

$D_{cpGAN}$ takes as input the realizations of $\hat{H}_{n,1:T_n}$, $\tilde{H}_{train_{n,1:T_n}}$ and $H_{n,1:T_n}$ (hint matrix, a random binary-valued mask matrix (also referred as mask variable)) and outputs an estimated mask matrix, $\hat{M}_{n,1:T_n}$, the predicted probability of cluster labels, $p^*_{n,1:T_n,m}$, the predicted probability of adversarial ground-truth, i.e real/fake, $p^*_{n,1:T_n}$, the estimated probability distributions, $P(H^*_{n,1:T_n})$, $\forall n \in \{1,2, \dots , N\}$ as described by,

$$\hat{M}_{n,1:T_n}, p^*_{n,1:T_n,m}, p^*_{n,1:T_n}, P(H^*_{n,1:T_n}) = D_{cpGAN}(\hat{H}_{n,1:T_n} \odot (1 - H_{n,1:T_n}) +$$

$$\tilde{H}_{train_{n,1:T_n}} \odot H_{n,1:T_n}) \qquad (25)$$

The superscript, * corresponds to real, $p_{train_{n,1:T_n,m}}$, $p_{train_{n,1:T_n}}$, $P(\tilde{H}_{train_{n,1:T_n}})$ or synthetic, $\hat{p}_{n,1:T_n,m}$, $\hat{p}_{n,1:T_n}$, $P(\hat{H}_{n,1:T_n})$. $\hat{M}_{n,1:T_n}$ can also be viewed as, $\{0,1\}^{(T_n,f)}$, $\forall n \in \{1,2, \dots , N\}$. It gives the probability say, $\hat{M}^{(j)}_{n,t}$ of $\hat{H}^{(j)}_{n,t}$ for $j$ - $th$ variable corresponding to a sequence, n at $t$ - $th$ timepoint being observed. In the context of the present disclosure, $H_{n,1:T_n} \in \{0,1\}^{(T_n,f)}$, $\forall n \in \{1,2, \dots , N\}$ denotes a Hint matrix. The $G_{cpGAN}$ of the cpGAN framework produces synthetic outputs, $\hat{H}_{n,1:T_n}$ by operating on the random noise space, $Z$, and the discriminator neural network, $D_{cpGAN}$ by operating on the adversarial learning latent space, $H$, tries to distinguish latent temporal embeddings, $\hat{H}_{n,1:T_n}$ and $\tilde{H}_{train_{n,1:T_n}}$. The binary adversarial cross-entropy loss for classification of the sequence observation as real or fake is described by,

$$\mathcal{L}_U = \frac{1}{N}\sum_{n=1}^N[-(y_{n,1:T_n}log(p_{train_{n,1:T_n}}) + (1 - y_{n,1:T_n})log(1 -$$

$$p_{train_{n,1:T_n}})) + (y_{n,1:T_n}log(\hat{p}_{n,1:T_n}) + (1 - y_{n,1:T_n})log(1 - \hat{p}_{n,1:T_n}))] \qquad (26)$$

$y_{n,1:T_n} \in \{0,1\}^{T_n}$, $\forall n \in \{1,2, \dots , N\}$ is the adversarial ground-truth, real or fake data. $p_{train_{n,1:T_n}}$, $\hat{p}_{n,1:T_n} \in [0,1]^{T_n}$, $\forall n \in \{1,2, \dots , N\}$ is the predicted probability of the sequence is real and $1 - p_{train_{n,1:T_n}}$ & $1 - \hat{p}_{n,1:T_n}$ is the predicted probability of the sequence being fake. $D_{cpGAN}$ tries to minimize, $\mathcal{L}_U$. The $G_{cpGAN}$ tries to minimize, $-\mathcal{L}_{US}$ which helps to learn $\hat{P}(\hat{D}_{n,1:T_n})$ that best approximates $P(\tilde{D}_{train_{n,1:T_n}})$. The cross-entropy loss in binary classification for predicting the input random mask matrix is described by,

$$\mathcal{L}_M = -\frac{1}{N}\sum_{n=1}^{N}(M_{n,1:T_n}log\hat{M}_{n,1:T_n} + (1 - M_{n,1:T_n})log(1 - \hat{M}_{n,1:T_n}))|M_{n,t}^{(j)} =$$

$$0 \qquad\qquad (27)$$

The $D_{cpGAN}$ attempts to maximize the probability of accurately predicting, $M_{n,1:T_n}$. $D_{cpGAN}$ tries to minimize, $\mathcal{L}_M$ and $G_{cpGAN}$ tries to minimize, $-\mathcal{L}_M$. The loss, $\mathcal{L}_M$ is evaluated for mask values, $M_{n,t}^{(j)} = 0$. This is due to the sole reason that the $G_{cpGAN}$ network ideally should impute the missing data in $\widetilde{H}_{train_{n,1:T_n}} \odot M_{n,1:T_n}$ with unbiased estimates as given by, $(1 - M_{n,1:T_n}) \odot \hat{H}_{n,1:T_n}$. The prediction of cluster-label, $C_{n,1:T_n}^{*}(\in \{0,1,...,k\})$ is a multi-class classification task. For the multiclass classification task of cluster label prediction, a separate loss for each cluster label is evaluated per observation. Summation operation of the output is then performed.

$$\mathcal{L}_{LP} = \frac{1}{N}[\sum_{m=1}^{k}\sum_{n=1}^{N} -y_{n,1:T_n}^{c}log\left(p_{train_{n,1:T_n,m}}\right) +$$

$$\sum_{m=1}^{k}\sum_{n=1}^{N} y_{n,1:T_n}^{c}log(\hat{p}_{n,1:T_n,m})\,] \qquad\qquad (28)$$

$k$ denotes the number of predetermined cluster labels. $y_{n,1:T_n}^{c}$ (ground-truth) denotes the binary value (0 or 1) if clustering label **m** is the correct classification for observation at time point $t(t \in 1: T_n)$ corresponding to data sequence, n. $p_{train_{n,1:T_n,m}}$ is the predicted probability for real observation at time point $t$ of a data sequence, n belongs to cluster label, **m**. $\hat{p}_{n,1:T_n,m}$ is the predicted probability for imputed synthetic observation at time point $t$ of a data sequence, n belongs to cluster label, **m**. The cluster labels are determined by,

$$C_{train_{n,1:T_n}}^{p} := \underset{m}{argmax}[Softmax(p_{train_{n,1:T_n,m}})], m \in \{0,1,...,k\}$$

$$\hat{C}_{n,1:T_n} := \underset{m}{argmax}[Softmax(\hat{p}_{n,1:T_n,m})], m \in \{0,1,...,k\}$$

The $D_{cpGAN}$ tries to minimize, $\mathcal{L}_{LP}$ whereas $G_{cpGAN}$ tries to minimize, $(-\mathcal{L}_{LP})$. $C_{train_{n,1:T_n}}^{p}$ denote the predicted cluster labels by the neural-network architecture in comparison with the ground-truth, $C_{train_{n,1:T_n}}$ corre-sponding to real data, $\widetilde{D}_{train_{n,1:T_n}}$. $\hat{C}_{n,1:T_n}$ denote the predicted cluster labels for the imputed temporal data, $\hat{D}_{n,1:T_n}$. Wasserstein distance between the estimates of two probability distributions $\mathbb{P}(\widetilde{H}_{train_{n,1:T_n}})$ and $\widehat{\mathbb{P}}(\hat{H}_{n,1:T_n})$ is also minimized. The Wasserstein loss, $\mathcal{L}_W$ is described by,

$$\mathcal{L}_W = W(\mathbb{P}(\widetilde{H}_{train_{n,1:T_n}}), \widehat{\mathbb{P}}(\hat{H}_{n,1:T_n}))$$

$$= inf_{\gamma \sim \Pi(P,\hat{P})}\mathbb{E}_{(H_{train_{n,1:T_n}},\hat{H}_{n,1:T_n})\sim\gamma}[\|\,\mathbb{P}(\widetilde{H}_{train_{n,1:T_n}}) - \widehat{\mathbb{P}}(\hat{H}_{n,1:T_n})\,\|]$$

$$(29)$$

$$\gamma \sim \Pi(\mathbb{P}(\widetilde{H}_{train_{n,1:T_n}}), \widehat{\mathbb{P}}(\hat{H}_{n,1:T_n}))$$ is the set of all possible joint probability distributions between

$\mathbb{P}(\widetilde{H}_{train_{n,1:Tn}})$ and $\widehat{\mathbb{P}}(\hat{H}_{n,1:T_n})$. The $D_{cpGAN}$ tries to maximize, $\mathcal{L}_W$ whereas the $G_{cpGAN}$ tries to minimize, $\mathcal{L}_W$ . The discriminator module is realized by leveraging a sequential operation on a stack of neural-network architectures comprising of unidirectional LSTM and a feed-forward neural network layer.

**Training of cpGAN/system of FIGS. 1-2:**

The embedding module ($E_{cpGAN}$) and the recovery module ($R_{cpGAN}$) were jointly trained on the task of reconstructing the fully observed temporal data, $\widetilde{D}_{train_{n,1:Tn}}$ . Initially, the supervisor module ($S_{cpGAN}$) was trained in the supervised-learning approach on the single-step ahead prediction task of the fully observed temporal latent variable, $\widetilde{H}_{train_{n,1:Tn}}$ , $\forall n \in \{1,2, \dots , N\}$ by operating in the latent space, $\mathbb{H}$ . In the beginning, the critic module ($F_{cpGAN}$) was trained on the original fully observed data to minimize the target variable prediction loss, $\mathcal{L}_F$ . Here, the objective is to minimize, $min_{\Phi_e,\Phi_r,\Phi_s,\Phi_c}(\mathcal{L}_R + \mathcal{L}_S + \mathcal{L}_F)$ . $\Phi_e, \Phi_r, \Phi_s, \Phi_c$ denote the trainable parameters of the embedding, the recovery, the supervisor, and the critic neural network functions respectively. Let $\theta_g$, $\theta_d$ describe the learnable parameters of the $G_{cpGAN}$, $D_{cpGAN}$ neural network functions. The $G_{cpGAN}$ outputs $\hat{D}_{n,1:T_n}$, $\forall n \in \{1,2, \dots , N\}$, which contains both the unimputed data and imputed data as given by $M_{n,1:T_n}$ , and $(1 - M_{n,1:T_n})$ respectively. $G$ was trained by eight distinct loss functions classified as unsupervised & supervised losses, $\mathcal{L}_{US}$ , $\mathcal{L}_G$ , $\mathcal{L}_U$ , $\mathcal{L}_W$ , $\mathcal{L}_M$ , $\mathcal{L}_S$ , $\mathcal{L}_F$ and $\mathcal{L}_{LP}$ . $G_{cpGAN}$ is trained adversarially to minimize the weighted sum of the above loss functions,

$$\mathcal{L}_G = \min_{\theta_g}[\alpha((-\mathcal{L}_U) + \gamma(\mathcal{L}_W) + (-\mathcal{L}_M) + (-\mathcal{L}_{LP})) + \mathcal{L}_{US} + \mathcal{L}_G + \mathcal{L}_S + \mathcal{L}_F] \quad (30)$$

Here, $\alpha \in \mathbf{R^+}$ is a hyper-parameter. In the experiments conducted by the present disclosure, $\alpha$ = 100 and $\gamma$ = 10. $D_{cpGAN}$ was trained by four distinct loss functions $\mathcal{L}_U$ , $\mathcal{L}_W$ , $\mathcal{L}_M$ and $\mathcal{L}_{LP}$ . $D$ was trained to minimize the weighted sum of the loss functions,

$$\mathcal{L}_D = \min_{\theta_d}(\alpha((\mathcal{L}_U) + \gamma(-\mathcal{L}_W) + (\mathcal{L}_M) + (\mathcal{L}_{LP}))) \quad (31)$$

$G_{cpGAN}$, $D_{cpGAN}$ were trained adversarially by deceptive input as follows, $min_{G_{cpGAN}}max_{D_{cpGAN}}\mathcal{L}(G_{cpGAN}, D_{cpGAN})$. It can be expressed as,

$$\min_{\theta_g}[\alpha((-\mathcal{L}_U) + \gamma(\mathcal{L}_W) + (-\mathcal{L}_M) + (-\mathcal{L}_{LP})) + \mathcal{L}_{US} + \mathcal{L}_G + \mathcal{L}_S + \mathcal{L}_F +$$
$$\max_{\theta_d}(\alpha((-\mathcal{L}_U) + \gamma(\mathcal{L}_W) + (-\mathcal{L}_M) + (-\mathcal{L}_{LP})))] \quad (32)$$

In conclusion, the cpGAN architecture was trained with both the supervised and unsupervised losses. Performance of the cpGAN was evaluated on $\widetilde{D}_{test_{n,1:Tn}}$ and is reported herein accordingly. The unbiased imputed data, $\hat{D}_{n,1:T_n}$ is then beneficial for utilization in the downstream predictive analytics task and forecasting tasks. The validation dataset is utilized for the hyper-parameter tuning of the imputation network. Performance of the cpGAN is evaluated on the test dataset.

**Results:**

Electricity Transformer Temperature (ETT) datasets used during experiments contained 2-year data of electricity transformer usage and reported in, Informer: Beyond Efficient Transformer for Long Sequence Time-Series Forecasting. Each dataset (ETTm1, and ETTm2) contained 70,080 (2 year * 365 days * 24 hours * 4 times (observation at 15min interval)) temporal observations. In addition, hour-wise recorded dataset (ETTh1, ETTh2) has been leveraged to evaluate performance of the method of the present disclosure. The train/validation/test splits are 60/20/20%. Table 1 reports the Root Mean Square Error (RMSE) in imputing the ETT test dataset by the cpGAN architecture. The cumulative imputation error increases with an accretion of the random missing percentage for each column feature attribute on all the datasets. As reported in Table 2, LSTM neural network is utilized as a standard benchmark model trained on original train data on the basis of supervised-learning driven downstream tasks of the target variable ("oil temperature" (∘C)) and one-step-ahead prediction with distinct learnable parameters respectively. The evaluation of the prediction models is performed on the original test dataset and the imputed test datasets. The performance is reported in terms of the RMSE metric. As observed in Table 2, the first column reports the prediction error on the original test dataset. The subsequent columns report prediction error on the imputed test datasets. The adversarial training of the generator imputation network (or the generator) for imputing missing data with the random missing (%) of each column attribute in the range, [2.5%, 20%] resulted in an on-par performance of the prediction model on the imputed test dataset in comparison with the original test dataset. For the single-step ahead prediction, as shown in Table 3, the error in forecasting rises as the missing (%) of feature attributes increases. In Table 4, the experimental results demonstrate the cpGAN algorithmic framework (or cpGAN as implemented by the present disclosure) efficacy in the downstream application task of the target variable prognostics and it outperforms several strong baselines in the literature, as reflected in the lower prediction error. The results reported in Tables 1, 2, 3, and 4 on the respective tasks are obtained from the arithmetic mean of five computational experimental runs. The error of deviation is at most 5% from the statistical mean value reported in Table 2, Table 3, and Table 4. The system and method of the present disclosure leveraged NVIDIA® T4 GPU for the training of deep learning models built upon the PyTorch framework.

Table 1: Performance of cpGAN architecture on ETT test dataset in terms of RMSE metric

| Dataset | ETTh 1 | ETTh 1 | ETTh 1 | ETTh 1 | ETTh 2 | ETTh 2 | ETTh 2 | ETTh 2 |
|---|---|---|---|---|---|---|---|---|
| Missing (%) | 2.5 (%) | 5 (%) | 10 (%) | 20 (%) | 2.5 (%) | 5 (%) | 10 (%) | 20 (%) |
| RMSE | 0.837 | 0.852 | 2.224 | 4.685 | 1.067 | 1.771 | 2.914 | 5.267 |
| Dataset | ETTh | ETTh | ETTh | ETTh | ETTh | ETTh | ETTh | ETTh 2 |

| | 1 | 1 | 1 | 1 | 2 | 2 | 2 | |
|---|---|---|---|---|---|---|---|---|
| RMSE | 1.045 | 1.050 | 1.471 | 3.053 | 1.385 | 1.598 | 3.359 | 7.836 |

Table 2: Results of prediction model on the target variable prediction on ETT test dataset

| Missing (%) | 0 (%) | 2.5 (%) | 5 (%) | 10 (%) | 20 (%) | 60 (%) | 90 (%) |
|---|---|---|---|---|---|---|---|
| Dataset | LSTM | LSTM | LSTM | LSTM | LSTM | LSTM | LSTM |
| ETTh1 | 11.764 | 9.737 | 9.852 | 10.157 | 9.370 | 16.327 | 26.701 |
| ETTh2 | 10.786 | 10.121 | 10.228 | 10.885 | 11.671 | 28.164 | 24.760 |
| ETTm1 | 11.886 | 8.756 | 9.231 | 9.104 | 9.964 | 9.124 | 31.958 |
| EETm2 | 11.196 | 11.196 | 10.498 | 10.935 | 12.400 | 18.240 | 26.588 |

Table 3: Results of forecasting model on the single-step ahead prediction on ETT test dataset

| Dataset | Missing (%) | HUFL | HULL | MUFL | MULL | LUFL | LULL | OT |
|---|---|---|---|---|---|---|---|---|
| ETTm1 | 0 (%) | 7.78 | 4.18 | 7.79 | 4.01 | 2.96 | 2.13 | 3.69 |
| ETTm1 | 2.5 (%) | 17.78 | 8.69 | 18.62 | 9.29 | 5.40 | 5.45 | 15.18 |
| ETTm1 | 5 (%) | 17.63 | 8.58 | 18.65 | 9.26 | 5.40 | 5.40 | 15.08 |
| ETTm1 | 10 (%) | 17.49 | 8.63 | 18.39 | 9.23 | 5.32 | 5.33 | 14.98 |
| ETTm1 | 20 (%) | 17.54 | 8.57 | 18.66 | 10.58 | 6.00 | 5.06 | 15.29 |
| ETTm1 | 60 (%) | 19.40 | 8.33 | 24.03 | 8.57 | 5.71 | 5.29 | 13.72 |
| ETTm1 | 90 (%) | 28.74 | 12.99 | 31.41 | 13.11 | 8.43 | 8.74 | 25.80 |
| ETTm2 | 0 (%) | 8.25 | 8.70 | 7.71 | 6.91 | 6.57 | 5.51 | 8.09 |
| ETTm2 | 2.5 (%) | 18.28 | 15.01 | 16.11 | 15.20 | 18.97 | 27.84 | 18.20 |
| ETTm2 | 5 (%) | 18.24 | 15.21 | 16.02 | 15.03 | 19.15 | 27.68 | 18.26 |
| ETTm2 | 10 (%) | 18.36 | 15.45 | 16.10 | 15.09 | 19.14 | 27.27 | 18.22 |
| ETTm2 | 20(%) | 21.59 | 15.24 | 17.34 | 14.81 | 18.92 | 28.26 | 17.30 |
| ETTm2 | 60 (%) | 20.93 | 21.91 | 17.35 | 14.50 | 18.01 | 28.37 | 16.93 |
| ETTm2 | 90 (%) | 22.82 | 25.76 | 23.54 | 21.18 | 22.80 | 33.81 | 20.84 |

Table 4: Results of the target variable prediction model on the imputed ETT test dataset obtained from various imputation techniques in the literature. The error metric is RMSE.

| Dataset | ETTh 1 | ETTh 1 | ETTh 1 | ETTh 1 | ETTh 2 | ETTh 2 | ETTh 2 | ETTh 2 |
|---|---|---|---|---|---|---|---|---|
| Missing (%) | 10 (%) | 20 (%) | 60 (%) | 90 (%) | 10 (%) | 20 (%) | 60 (%) | 90 (%) |
| MICE (Multivariate imputation | 12.18 | 13.04 | 21.15 | 35.51 | 13.06 | 14.08 | 36.16 | 34.71 |

| Dataset | ETTm1 | ETTm1 | ETTm1 | ETTm1 | ETTm2 | ETTm2 | ETTm2 | ETTm2 |
|---|---|---|---|---|---|---|---|---|
| by Chained Equations – as known in the art) | | | | | | | | |
| GAN (generative adversarial network - as known in the art) | 10.41 | 10.60 | 20.81 | 32.04 | 11.15 | 11.96 | 33.65 | 34.57 |
| BRITS (Bidirectional recurrent imputation for time series - as known in the art) | 10.96 | 10.119 | 19.60 | 30.70 | 11.755 | 12.607 | 32.670 | 33.776 |
| cpGAN (system of the present disclosure) | 10.157 | 9.370 | 16.327 | 26.701 | 10.885 | 11.671 | 28.164 | 24.760 |

| MICE (Multivariate imputation by Chained Equations – as known in the art) | 10.92 | 11.956 | 11.742 | 39.947 | 12.73 | 13.895 | 23.02 | 34.56 |
|---|---|---|---|---|---|---|---|---|
| GAN (generative adversarial network - as known in the art) | 9.301 | 10.113 | 11.086 | 36.751 | 11.198 | 12.733 | 21.446 | 32.836 |
| BRITS (Bidirectional recurrent imputation for time series - as known in the art) | 9.383 | 10.612 | 10.864 | 36.078 | 11.979 | 13.064 | 21.324 | 31.578 |
| cpGAN (system of the present | 9.104 | 9.964 | 9.124 | 31.958 | 10.935 | 12.401 | 18.24 | 26.588 |

| disclosure) | | | | | | | | |
|---|---|---|---|---|---|---|---|---|
| | | | | | | | | |

As described above, the cpGAN comprises of embedding, critic, supervisor, generator, discriminator, and recovery neural network functions (or also referred as modules and interchangeably used herein) to tackle the temporal nonuniformity of the incomplete observed multidimensional continuous-variable time series data. The input to the cpGAN is the multidimensional continuous-variable time series data, random mask variable, and cluster-independent random noise. The input data preprocessing involves feature scaling by transforming the scale of continuous feature variables by utilizing the min-max normalization technique(s) as known in the art to obtain the preprocessed data. The preprocessed data is split into training, validation, and test dataset respectively. Training of the cpGAN consisted of two phases. In the first phase, the following modules were trained namely, the embedding, recovery, critic, and supervisor modules of the imputation network by utilizing the training dataset. More specifically, the training dataset is fed as an input to the embedding module to obtain high-dimensional feature embeddings. The high-dimensional feature embeddings are fed as input to the recovery module to reconstruct the training dataset. The embedding and recovery modules are trained jointly in a supervised learning approach to reconstruct the input training dataset. The high-dimensional feature embeddings are fed as input to the supervisor module to obtain single-step ahead predictions of the feature embeddings. The supervisor module is trained in a supervised learning approach as a forecasting model to minimize the forecasting error predictions on the training dataset. The high-dimensional feature embeddings are fed as input to the critic module. The high-dimensional feature embeddings consist of independent feature embeddings and dependent target feature embedding. The critic module operates on the independent feature embeddings to predict the target feature embedding. The critic module is trained in a supervised learning approach as a prediction model to minimize the target variable prediction error on the training dataset.

In the second phase, the following modules namely, the generator, discriminator, recovery, critic, and supervisor modules of the imputation network/cpGAN are jointly trained by utilizing the training dataset and cluster-independent random noise and the mask variable. For instance, cluster-dependent random noise is obtained by transforming the cluster-independent random noise by using the cluster-labels corresponding to the training dataset. A linear transformation is performed on the summation of the product of the mask variable with the feature embeddings of the training dataset and the flipped mask variable with the cluster-dependent random noise to obtain the imputed synthetic noise. The imputed synthetic noise is fed as input to the generator module to output the imputed high-dimensional feature embeddings. The generator is trained to fool the discriminator to classify the imputed high-dimensional feature embeddings as real. The imputed high-dimensional feature embeddings are fed as input to the critic module to predict the imputed target feature embeddings. The critic module is trained to minimize the difference between the target feature embedding of the training dataset and the predicted imputed target feature embeddings in a supervised learning approach. The imputed feature embeddings are fed to the discriminator to assign a label as real or fake, wherein the discriminator tries to classify the imputed high-dimensional feature embeddings as fake. The imputed high-dimensional feature embeddings are fed as input to the supervisor module to generate the single-step ahead predictions of the imputed feature embeddings. The supervisor module is trained to minimize the difference between the single-step ahead predictions of the imputed feature embeddings and the feature embeddings of the training dataset in a supervised learning approach. The single-step ahead imputed feature embeddings are fed to the recovery module to obtain the imputed training data. The recovery module is trained in an unsupervised learning approach to minimize the difference between the imputed training data and the input training data. Though the experimental results depict for a specific use scenario (e.g., Electricity Transformer Temperature (ETT)) or application, such use scenario or application shall not be construed as limiting the scope of the present disclosure. For instance, the cpGAN system 100 used for imputing low-dimensional multivariate industrial time-series data may be used in Digital Twin, simulation of Industry Plants/machines/sensors (or sensor data), production units and/or manufacturing units.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. **Also, the words "comprising," "having," "containing," and "including," and other** similar forms are intended to be equivalent in meaning and be open ended in that an item or items following any one of these words is not meant to be an exhaustive listing of such item or items, or meant to be limited to only the listed item or items. It must **also be noted that as used herein and in the appended claims, the singular forms "a," "an," and "the" include plural references unless the context clearly dictates otherwise.**

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. **The term "computer-readable medium" should** be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

    obtaining, via one or more hardware processors, an input training dataset, a cluster independent random noise and one or more associated cluster labels corresponding to the input training dataset (302);
    transforming, via the one or more hardware processors, the cluster independent random noise by using the one or more associated cluster labels corresponding to the input training dataset to obtain a cluster dependent random noise (304);
    generating, via the one or more hardware processors, an imputed synthetic noise based on (i) a mask variable, (ii) one or more feature embeddings of the training dataset, (iii) a flipped mask variable, and (iv) the obtained cluster dependent random noise (306);
    generating, via the one or more hardware processors, one or more imputed high-dimensional feature embeddings using the generated imputed synthetic noise (308);
    predicting, via the one or more hardware processors, one or more imputed high-dimensional target feature embeddings of the training dataset using the one or more imputed high-dimensional feature embeddings (310);
    generating, via the one or more hardware processors, one or more single-step ahead imputed high-dimensional feature embeddings using the one or more imputed high-dimensional feature embeddings (312); and
    generating, via the one or more hardware processors, an imputed training data using the one or more single-step ahead imputed high-dimensional feature embeddings (314).

2. The processor implemented method as claimed in claim 1, wherein the cluster dependent random noise is obtained from the cluster independent random noise that is sampled from a Gaussian distribution and the one or more associated cluster labels corresponding to the input training dataset.

3. The processor implemented method as claimed in claim 1, wherein the flipped mask variable is obtained based on a difference between a pre-defined value and the mask variable.

**4.** The processor implemented method as claimed in claim 1, further comprising minimizing a difference between one or more target feature embeddings of the input training dataset and the one or more predicted imputed high-dimensional target feature embeddings.

**5.** The processor implemented method as claimed in claim 1, further comprising validating the imputed training data based on a comparison of the imputed training data and the input training dataset.

**6.** The processor implemented method as claimed in claim 1, further comprising classifying the one or more imputed high-dimensional feature embeddings into at least one class type.

**7.** A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain an input training dataset, a cluster independent random noise and one or more associated cluster labels corresponding to the input training dataset;
transform the cluster independent random noise by using the one or more associated cluster labels corresponding to the input training dataset to obtain a cluster dependent random noise;
generate an imputed synthetic noise based on (i) a mask variable, (ii) one or more feature embeddings of the training dataset, (iii) a flipped mask variable, and (iv) the obtained cluster dependent random noise;
generate, by using a generator module comprised in the cpGAN, one or more imputed high-dimensional feature embeddings using the generated imputed synthetic noise;
predict, by using a critic module comprised in the cpGAN, one or more imputed high-dimensional target feature embeddings of the training dataset using the one or more imputed high-dimensional feature embeddings;
generate, by using a supervisor module comprised in the cpGAN, one or more single-step ahead imputed feature embeddings using the one or more imputed high-dimensional feature embeddings; and
generate, by using a recovery module comprised in the cpGAN, an imputed training data using the one or more single-step ahead imputed high-dimensional feature embeddings.

**8.** The system as claimed in claim 7, wherein the cluster dependent random noise is obtained from the cluster independent random noise that is sampled from a Gaussian distribution and the one or more associated cluster labels corresponding to the input training dataset.

**9.** The system as claimed in claim 7, wherein the flipped mask variable is obtained based on a difference between a pre-defined value and the mask variable.

**10.** The system as claimed in claim 7, wherein the one or more hardware processors are further configured by the instructions to minimize a difference between one or more target feature embeddings of the input training dataset and the one or more predicted imputed high-dimensional target feature embeddings.

**11.** The system as claimed in claim 7, wherein the one or more hardware processors are further configured by the instructions to validate, by using a discriminator comprised in the cpGAN, the imputed training data based on a comparison of the imputed training data and the input training dataset.

**12.** The system as claimed in claim 7, wherein the one or more hardware processors are further configured by the instructions to classify, by using a discriminator comprised in the cpGAN, the one or more imputed high-dimensional feature embeddings into at least one class type.

**13.** One or more non-transitory machine-readable information storage mediums comprising one or more instructions which when executed by one or more hardware processors cause:

obtaining, an input training dataset, a cluster independent random noise and one or more associated cluster labels corresponding to the input training dataset;
transforming the cluster independent random noise by using the one or more associated cluster labels corresponding to the input training dataset to obtain a cluster dependent random noise;

generating an imputed synthetic noise based on (i) a mask variable, (ii) one or more feature embeddings of the training dataset, (iii) a flipped mask variable, and (iv) the obtained cluster dependent random noise;

generating one or more imputed high-dimensional feature embeddings using the generated imputed synthetic noise;

predicting one or more imputed high-dimensional target feature embeddings of the training dataset using the one or more imputed high-dimensional feature embeddings;

generating one or more single-step ahead imputed high-dimensional feature embeddings using the one or more imputed high-dimensional feature embeddings; and

generating an imputed training data using the one or more single-step ahead imputed high-dimensional feature embeddings.

14. The one or more non-transitory machine-readable information storage mediums as claimed in claim 13, wherein the cluster dependent random noise is obtained from the cluster independent random noise that is sampled from a Gaussian distribution and the one or more associated cluster labels corresponding to the input training dataset.

15. The one or more non-transitory machine-readable information storage mediums as claimed in claim 13, wherein the one or more instructions which when executed by the one or more hardware processors further cause one or more of:

minimizing a difference between one or more target feature embeddings of the input training dataset and the one or more predicted imputed high-dimensional target feature embeddings;

validating the imputed training data based on a comparison of the imputed training data and the input training dataset; and

classifying the one or more imputed high-dimensional feature embeddings into at least one class type, wherein the flipped mask variable is obtained based on a difference between a pre-defined value and the mask variable.

**Amended claims in accordance with Rule 137(2) EPC.**

1. A processor implemented method (200), comprising:

obtaining, via one or more hardware processors, an input training dataset, a cluster independent random noise and one or more associated cluster labels corresponding to the input training dataset (302), wherein the cluster dependent random noise is obtained from the cluster independent random noise that is sampled from a Gaussian distribution and the one or more associated cluster labels corresponding to the input training dataset, and wherein the one or more associated cluster labels corresponding to the input training dataset are obtained by performing vector quantization through an unsupervised learning technique;

transforming, via the one or more hardware processors, the cluster independent random noise by using the one or more associated cluster labels corresponding to the input training dataset to obtain a cluster dependent random noise (304);

generating, via the one or more hardware processors, an imputed synthetic noise based on (i) a mask variable, (ii) one or more feature embeddings of the training dataset, (iii) a flipped mask variable, and (iv) the obtained cluster dependent random noise (306), wherein the flipped mask variable is obtained based on a difference between a pre-defined value and the mask variable;

generating, via the one or more hardware processors, one or more imputed high-dimensional feature embeddings using the generated imputed synthetic noise (308);

predicting, via the one or more hardware processors, one or more imputed high-dimensional target feature embeddings of the training dataset using the one or more imputed high-dimensional feature embeddings (310);

generating, via the one or more hardware processors, one or more single-step ahead imputed high-dimensional feature embeddings using the one or more imputed high-dimensional target feature embeddings (312), wherein generating the one or more single-step ahead imputed high-dimensional feature embeddings includes:

invoking a supervisor module (206) comprised in a congeniality-preserving Generative Adversarial Networks, cpGAN, for generation of the one or more single-step ahead imputed high-dimensional feature embeddings, and

predicting, by the supervisor module (206), the one-step single-step ahead imputed high-dimensional feature embeddings conditioned on past latent sequences based on the one or more imputed high-dimensional target feature embeddings, wherein the supervisor module (206) leverages a supervisor neural network function to retain conditional temporal dynamics of the original data in the imputed temporal data; and

generating, via the one or more hardware processors, an imputed training data using the one or more single-step ahead imputed high-dimensional feature embeddings (314).

2. The processor implemented method (200) as claimed in claim 1, further comprising minimizing a difference between one or more target feature embeddings of the input training dataset and the one or more predicted imputed high-dimensional target feature embeddings.

3. The processor implemented method (200) as claimed in claim 1, further comprising validating the imputed training data based on a comparison of the imputed training data and the input training dataset.

4. The processor implemented method (200) as claimed in claim 1, further comprising classifying the one or more imputed high-dimensional feature embeddings into at least one class type.

5. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain an input training dataset, a cluster independent random noise and one or more associated cluster labels corresponding to the input training dataset, wherein the cluster dependent random noise is obtained from the cluster independent random noise that is sampled from a Gaussian distribution and the one or more associated cluster labels corresponding to the input training dataset, and wherein the one or more associated cluster labels corresponding to the input training dataset are obtained by performing vector quantization through an unsupervised learning technique;
transform the cluster independent random noise by using the one or more associated cluster labels corresponding to the input training dataset to obtain a cluster dependent random noise;
generate an imputed synthetic noise based on (i) a mask variable, (ii) one or more feature embeddings of the training dataset, (iii) a flipped mask variable, and (iv) the obtained cluster dependent random noise, wherein the flipped mask variable is obtained based on a difference between a pre-defined value and the mask variable;
generate, by using a generator module (202) comprised in a congeniality-preserving Generative Adversarial Networks, cpGAN, one or more imputed high-dimensional feature embeddings using the generated imputed synthetic noise;
predict, by using a critic module (204) comprised in the cpGAN, one or more imputed high-dimensional target feature embeddings of the training dataset using the one or more imputed high-dimensional feature embeddings;
generate, by using a supervisor module (206) comprised in the cpGAN, one or more single-step ahead imputed feature embeddings using the one or more imputed high-dimensional target feature embeddings, wherein to generate the one or more single-step ahead imputed high-dimensional feature embeddings, the one or more hardware processors (104) are configured by the instructions to:

invoke the supervisor module (206) for generation of the one or more single-step ahead imputed high-dimensional feature embeddings, and
predict, by using the supervisor module (206), the one-step single-step ahead imputed high-dimensional feature embeddings conditioned on past latent sequences based on the one or more imputed high-dimensional target feature embeddings, wherein the supervisor module leverages a supervisor neural network function to retain conditional temporal dynamics of the original data in the imputed temporal data; and

generate, by using a recovery module (208) comprised in the cpGAN, an imputed training data using the one or more single-step ahead imputed high-dimensional feature embeddings.

6. The system (100) as claimed in claim 5, wherein the one or more hardware processors (104) are further configured by the instructions to minimize a difference between one or more target feature embeddings of the input training dataset and the one or more predicted imputed high-dimensional target feature embeddings.

7. The system (100) as claimed in claim 5, wherein the one or more hardware processors (104) are further configured by the instructions to validate, by using a discriminator comprised in the cpGAN, the imputed training data based on a comparison of the imputed training data and the input training dataset.

8. The system (100) as claimed in claim 5, wherein the one or more hardware processors (104) are further configured by the instructions to classify, by using a discriminator comprised in the cpGAN, the one or more imputed high-dimensional feature embeddings into at least one class type.

9. One or more non-transitory machine-readable information storage mediums comprising one or more instructions which when executed by one or more hardware processors (104) cause:

obtaining, an input training dataset, a cluster independent random noise and one or more associated cluster labels corresponding to the input training dataset, wherein the cluster dependent random noise is obtained from the cluster independent random noise that is sampled from a Gaussian distribution and the one or more associated cluster labels corresponding to the input training dataset, and wherein the one or more associated cluster labels corresponding to the input training dataset are obtained by performing vector quantization through an unsupervised learning technique;

transforming the cluster independent random noise by using the one or more associated cluster labels corresponding to the input training dataset to obtain a cluster dependent random noise;

generating an imputed synthetic noise based on (i) a mask variable, (ii) one or more feature embeddings of the training dataset, (iii) a flipped mask variable, and (iv) the obtained cluster dependent random noise, wherein the flipped mask variable is obtained based on a difference between a pre-defined value and the mask variable;

generating one or more imputed high-dimensional feature embeddings using the generated imputed synthetic noise;

predicting one or more imputed high-dimensional target feature embeddings of the training dataset using the one or more imputed high-dimensional feature embeddings;

generating one or more single-step ahead imputed high-dimensional feature embeddings using the one or more imputed high-dimensional target feature embeddings, includes:

invoking a supervisor module (206) comprises in a congeniality-preserving Generative Adversarial Networks, cpGAN, for generation of the one or more single-step ahead imputed high-dimensional feature embeddings, and

predicting, by the supervisor module (206), the one-step single-step ahead imputed high-dimensional feature embeddings conditioned on past latent sequences based on the one or more imputed high-dimensional target feature embeddings, wherein the supervisor module leverages a supervisor neural network function to retain conditional temporal dynamics of the original data in the imputed temporal data; and

generating an imputed training data using the one or more single-step ahead imputed high-dimensional feature embeddings.

10. The one or more non-transitory machine-readable information storage mediums as claimed in claim 9, wherein the one or more instructions which when executed by the one or more hardware processors (104) further cause one or more of:

minimizing a difference between one or more target feature embeddings of the input training dataset and the one or more predicted imputed high-dimensional target feature embeddings;

validating the imputed training data based on a comparison of the imputed training data and the input training dataset; and

classifying the one or more imputed high-dimensional feature embeddings into at least one class type.

SYSTEM
100

MEMORY
102

DATABASE
108

HARDWARE
PROCESSOR(S)
104

INTERFACE(S)
106

**FIG. 1**

FIG. 2

obtaining an input training dataset, a cluster independent random noise and one or more associated cluster labels corresponding to the training dataset ⌐∿ 302

transforming the cluster independent random noise by using the one or more associated cluster labels corresponding to the input training dataset to obtain a cluster dependent random noise ⌐∿ 304

generating an imputed synthetic noise based on (i) a mask variable, (ii) one or more feature embeddings of the training dataset, (iii) a flipped mask variable, and (ii) the obtained cluster dependent random noise ⌐∿ 306

generating one or more imputed high-dimensional feature embeddings using the generated imputed synthetic noise ⌐∿ 308

predicting one or more imputed high-dimensional target feature embeddings of the training dataset using the one or more imputed high-dimensional feature embeddings ⌐∿ 310

generating one or more single-step ahead imputed high-dimensional feature embeddings using the one or more imputed high-dimensional feature embeddings ⌐∿ 312

generating an imputed training data using the one or more single-step ahead imputed high-dimensional feature embeddings ⌐∿ 314

⌐∿ 200

**FIG. 3**

**EP 4 239 527 A1**

Europäisches
Patentamt
European
Patent Office
Office européen
des brevets

# EUROPEAN SEARCH REPORT

Application Number

EP 22 18 6912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YUFENG ET AL: "PC-GAIN: Pseudo-label conditional generative adversarial imputation networks for incomplete data", NEURAL NETWORKS, ELSEVIER SCIENCE PUBLISHERS, BARKING, GB, vol. 141, 2 June 2021 (2021-06-02), pages 395-403, XP086710800, ISSN: 0893-6080, DOI: 10.1016/J.NEUNET.2021.05.033 [retrieved on 2021-06-02] * abstract * * sections 1, 3, 4 * ----- | 1-15 | INV. G06N3/04 G06N3/08 |

TECHNICAL FIELDS
SEARCHED (IPC)

G06N

The present search report has been drawn up for all claims

| Place of search | Date of completion of the search | Examiner |
|---|---|---|
| The Hague | 12 December 2022 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221011587